# EUROPEAN PATENT APPLICATION

(11) **EP 2 963 188 A1**
(43) Date of publication of application: **06.01.2016**
(21) Application number: 14175856.5
(22) Date of filing: 04.07.2014
(51) Int. Cl.: E02F 3/96, B23D 17/00, E04G 23/08

(54) **Work tool and method for operating the work tool**

(71) Applicant: Caterpillar Work Tools B. V., 5232 BJ 's-Hertogenbosch (NL)
(72) Inventor: Verschuur, Nick, 5236 RE EMPEL (NL); Van Koningsbrugge, Frank, 5231 LJ 's-HERTOGENBOSCH (NL); Van Amelsfoort, Edward, 5018 CZ TILBURG (NL); Grant, Patrick, 5045 ML TILBURG (NL); Van Gemert, John, 5451 BT MILL (NL)
(74) Representative: Modiano, Micaela Nadia

(57) **Abstract**

A work tool (10) for a work machine with an increased jaw capacity is disclosed. The work tool (10) may comprise: a jaw assembly (12) comprising an upper jaw (16) and a lower jaw (18), the upper jaw (16) having an inner portion (38) and an outer portion (36) wherein the inner portion (38) is connected to the outer portion (36) at a first upper jaw connection axis (40) for mutual relative movement; a first linkage (42) connecting the lower jaw (18) to the inner portion (38) at a first lower jaw connection axis (44); and a second linkage (46) connecting the lower jaw (18) to the outer portion (36).

## Description

### Technical Field

This disclosure relates to the field of work tools for crushing and/or cutting material and more particularly to the field of demolition and pulveriser tools having jaw assemblies for crushing and/or cutting material.

### Background

A work tool for crushing and/ or cutting material is generally known. Typically, the work tool may comprise a jaw assembly having an upper jaw and a lower jaw. The first and lower jaws may be pivotally connected. The first and lower jaws may be moveable relative to each other. Blades may be provided on both jaws.

Material may be crushed or cut by closing the jaw assembly such that the low and upper jaws are moved towards each other. The jaw assembly may be opened and closed under hydraulic pressure from a hydraulic cylinder. The work tool may comprise a frame that connects the jaw assembly to a jib of a machine.

The work tool may have a jaw assembly that is suitable for crushing and pulverizing concrete and reinforced concrete structures. The work cycle of a jaw assembly may be the opening of the first and lower jaws to collect material and closing of the jaws to crush and/ or pulverise the material. The cycle time for the jaw assembly may be dependent on the time taken to open and close the first and lower jaws and to crush and pulverize the material.

JP2010133109A discloses a crushing machine adaptable to both an operation for crushing by cutting into large pieces and an operation for crushing by cutting into small pieces. The crushing machine has an arm that includes a base frame, a fixed jaw which is integrally elongated from the base frame, a movable jaw which can be opened/closed and which is rotatably attached to the base frame and an extended jaw which protrudes from/recedes into the leading end of the fixed jaw in synchronization with the opening/closing of the movable jaw.

US56644734 discloses a crusher having a frame with a pair of support plates and rotatably mounted on the bracket, a lock arm having a pair of arm plates and pivotally mounted between the pair of support plates. The lock arm may carry at one end thereof a crushing jaw. A movable arm may be mounted between the arm plates of the lock arm so as to be pivotable about a first axis that is nearer to the tip of the arm than a second axis about which the lock arm pivots. A trunnion type drive cylinder may be mounted between the arm plates for pivoting the movable arm toward and away from the crushing jaw. The drive cylinder may have pivots arranged on the second axis and pivotally supporting the lock arm. A fixing means may fix the lock arm to the frame at both ends of the pivoting motion of the pivot shaft about the second axis. The ends may be separated a predetermined angle from each other.

The present disclosure is directed, at least in part, to improving or overcoming one or more aspects of the prior art system.

### Brief Summary of the Invention

In a first aspect, the present disclosure describes a work tool. The work tool may comprise: a jaw assembly comprising an upper jaw and a lower jaw, the upper jaw having an inner portion and an outer portion wherein the inner portion is connected to the outer portion at a first upper jaw connection axis for mutual relative movement; a first linkage connecting the lower jaw to the inner portion at a first lower jaw connection axis; and a second linkage connecting the lower jaw to the outer portion.

In a second aspect, the present disclosure describes a method of operating the work tool. The method may comprise the steps of: providing a jaw assembly comprising an upper jaw and a lower jaw, the upper jaw having an inner portion and an outer portion wherein the inner portion is pivotally connected to the outer portion at a first upper jaw connection axis for mutual relative movement; providing a first linkage connecting the lower jaw to the inner portion at a first lower jaw connection axis; providing a second linkage connecting the lower jaw to the outer portion; and pivoting the upper jaw about the first lower jaw connection axis such that the outer portion moves relative to the inner portion.

### Brief Description of the Drawings

The foregoing and other features and advantages of the present disclosure will be more fully understood from the following description of various embodiments, when read together with the accompanying drawings, in which:
Fig. 1 is a side view of a first embodiment of the work tool with the jaw assembly in the closed position according to the present disclosure;
Fig. 2 is a side view of the work tool of Fig. 1 with the jaw assembly in the open position;
Fig. 3 is an isometric view of the work tool of Fig. 1 with the jaw assembly in the open position;
Fig. 4 is a side view of a second embodiment of the work tool with the jaw assembly in the closed position according to the present disclosure; and
Fig. 5 is a side view of the work tool of Fig. 4 with the jaw assembly in the open position.

### Detailed Description

This disclosure generally relates to a work tool. The work tool may be supported on a work machine.

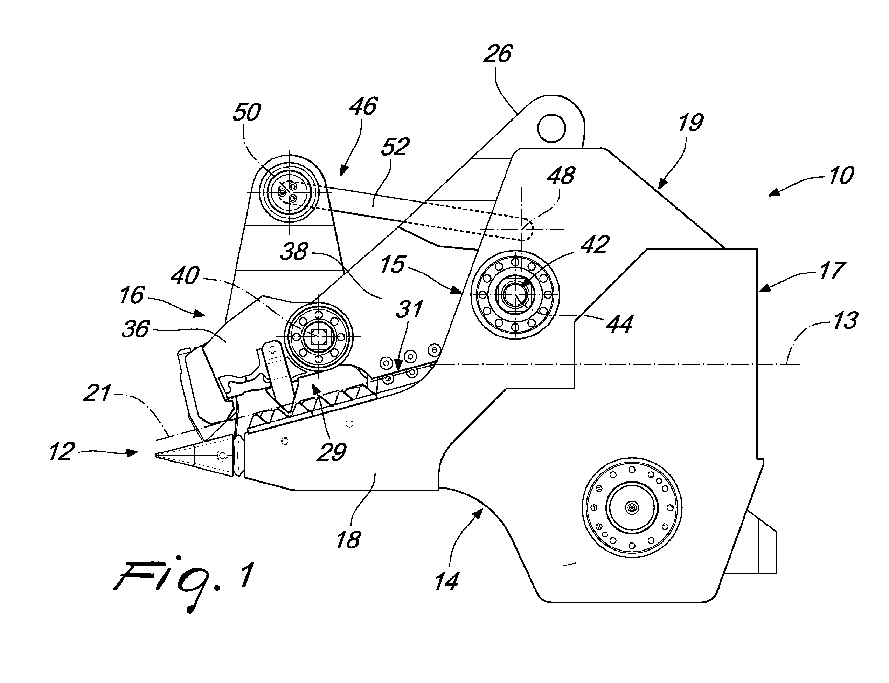

Fig. 1 illustrates a work tool **10.** The work tool **10** may comprise a jaw assembly **12.** The jaw assembly **12** may comprise an upper jaw **16** and a lower jaw **18.** The upper jaw **16** and the lower jaw **18** may be suitably provided for crushing concrete and/ or cutting iron sections. The upper jaw **16** may have an inner portion **38** and an outer portion **36.** The work tool **10** may comprise a first linkage **42** and a second linkage **46.**

A frame **14** may be integral with lower jaw **18.**

Frame **14** may support the jaw assembly **12.** Frame **14** may comprise attachment elements for housing components therein. Frame **14** may house a hydraulic cylinder (not shown) for actuating the jaw assembly **12.** The hydraulic cylinder may be connected to the frame **14** and to the jaw assembly **12.** In an embodiment, lower jaw **18** may house a hydraulic cylinder (not shown) for actuating the jaw assembly **12.** The hydraulic cylinder may be connected to the lower jaw **18** and to the upper jaw **16.**

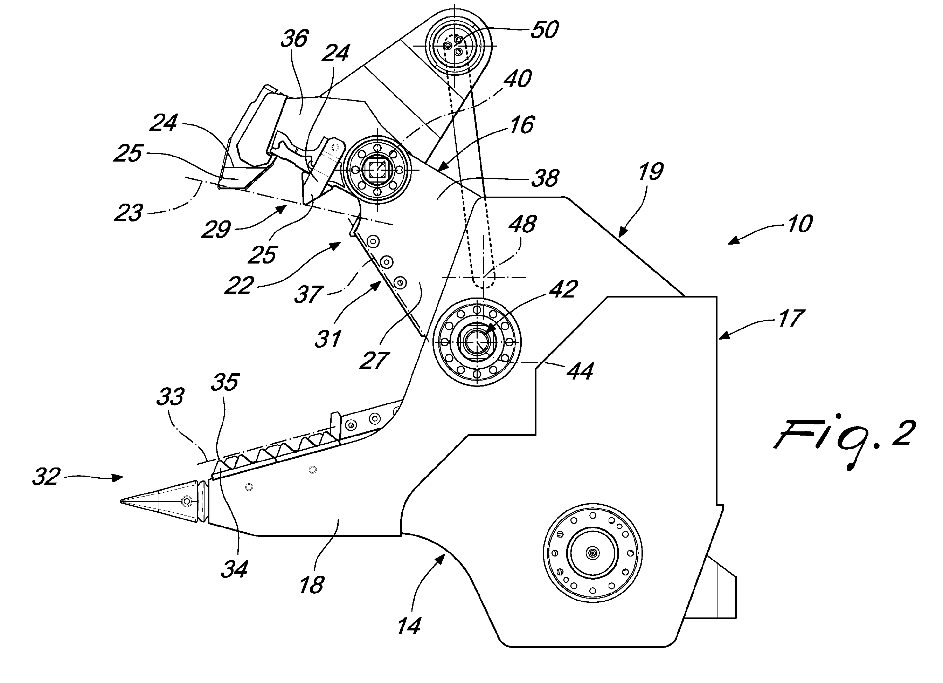

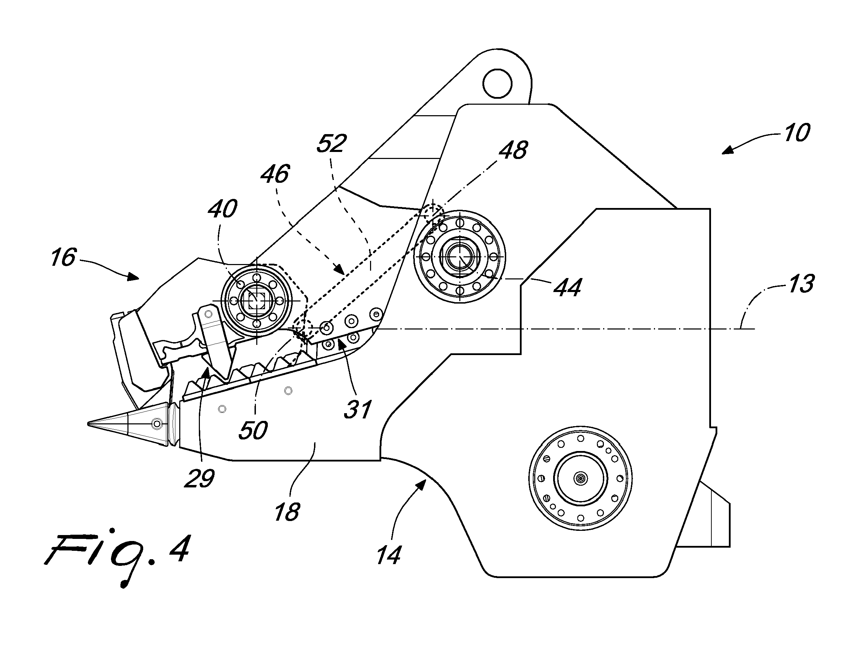

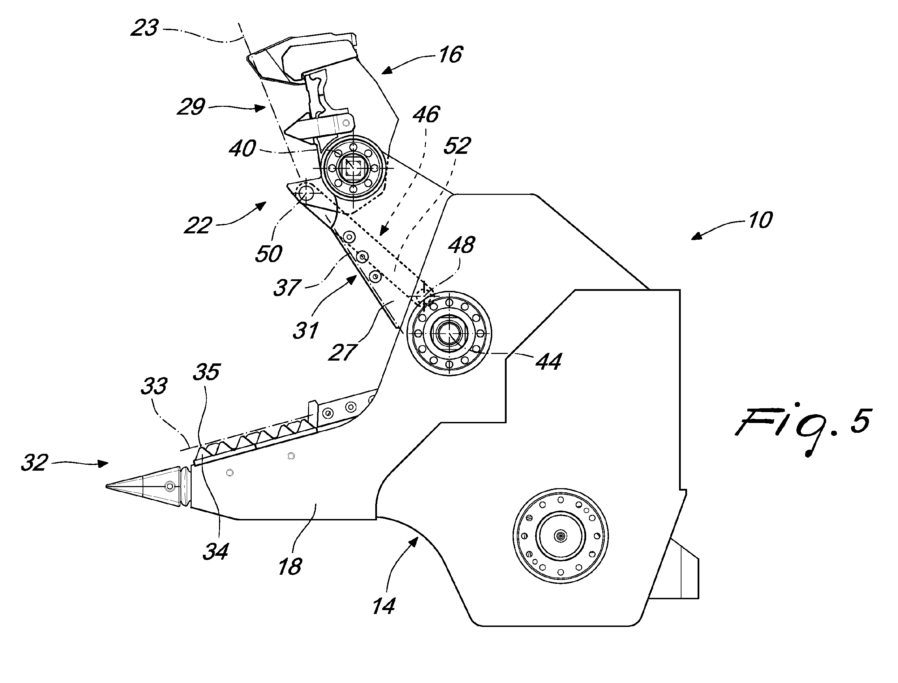

The hydraulic cylinder may actuate the jaw assembly **12** to open and close. Extraction of the hydraulic cylinder may actuate the jaw assembly **12** towards the closed position as illustrated in Figs. 1 and 4. Retraction of the hydraulic cylinder may actuate the jaw assembly **12** towards the open position as illustrated in Figs. 2 and 5.

The frame **14** or the lower jaw **18** may have a upper jaw connection end 15 for connection to the upper jaw 16 and a mounting end 17 for connection to a jib (not shown). Work tool 10 may have a central axis 13. Central axis 13 may extend to the lower jaw 18. Central axis 13 may extend between the upper jaw connection end 15 and the mounting end 17. Central axis 13 may extend from the lower jaw 18 to the mounting end 17. At least a part of the jaw assembly 12 may extend from the upper jaw connection end 15 in alignment with the central axis 13. In an embodiment, the extension of the part of the jaw assembly 12 may be parallel to the central axis 13.

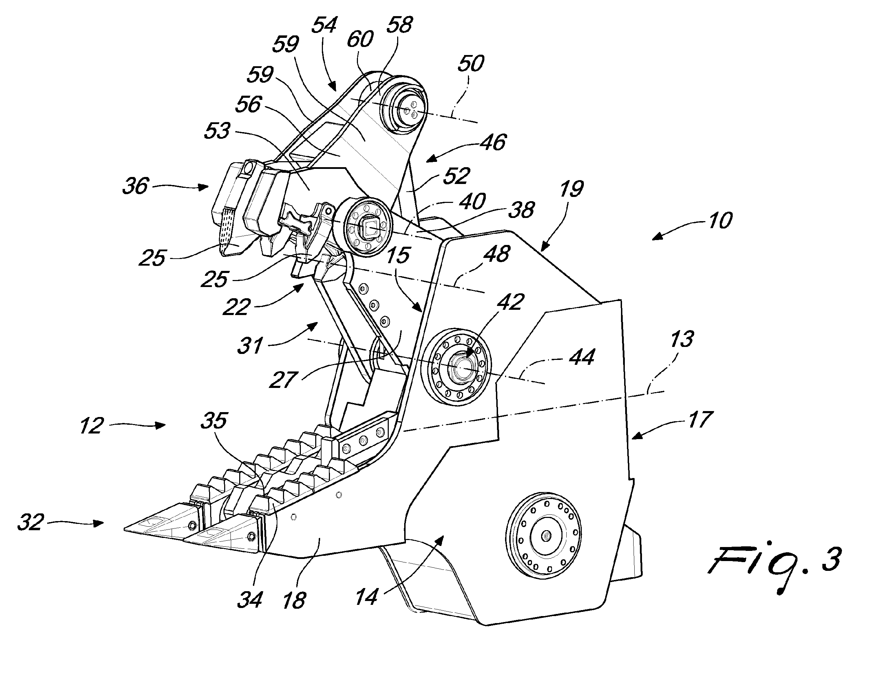

With reference to Fig. 3, frame 14 or the second jaw 18 may have a hinge portion 19. Hinge portion 19 may extend transversely away from the central axis 13. Hinge portion 19 may comprise spaced apart plates. Hinge portion 19 may be coupled to the jaw assembly 12. Jaw assembly 12 may be movable between a close and an open position about the hinge portion 19. At least a part of the jaw assembly 12 may be coupled between the plates. At least a part of the jaw assembly 12 may be movable between the plates.

With reference to Fig. 3, the work tool 10 may have a first lower jaw connection axis 44. A part of the jaw assembly 12 may be coupled to the frame 14 or lower jaw 18 at the first lower jaw connection axis 44. First lower jaw connection axis 44 may be located at the frame 14 or at lower jaw 18. First lower jaw connection axis 44 may be transverse to the frame 14 or to the lower jaw 18. First lower jaw connection axis 44 may extend through the frame 14 or lower jaw 18. First lower jaw connection axis 44 may be perpendicular to the central axis 13. First lower jaw connection axis 44 may be positioned on the frame 14 or lower jaw 18 adjacent the central axis 13. First lower jaw connection axis 44 may be positioned on the frame 14 adjacent the lower jaw 18.

First lower jaw connection axis 44 may be positioned between the upper jaw connection end 15 and the mounting end 17. First lower jaw connection axis 44 may be positioned between the upper jaw connection end 15 and the hydraulic cylinder. First lower jaw connection axis 44 may be positioned between the upper jaw connection end 15 and the line of extraction and retraction of the hydraulic cylinder.

With reference to Fig. 1, the work tool 10 may have a second lower jaw connection axis 48. A part of the jaw assembly 12 may be coupled to the frame at the second lower jaw connection axis 48. Second lower jaw connection axis 48 may be located at the lower jaw 18 or the frame **14.** Second lower jaw connection axis **48** may be transverse to the lower jaw **18b** or the frame **14.** Second lower jaw connection axis **48** may extend through the frame **14** or lower jaw **18.** Second lower jaw connection axis **48** may be perpendicular to the central axis **13.** Second lower jaw connection axis **48** may be positioned on the frame **14** or lower jaw **18** spaced from the central axis **13.** In an embodiment, second lower jaw connection axis **48** may be positioned on the frame **14** spaced from the lower jaw **18.**

Second lower jaw connection axis **48** may be positioned between the upper jaw connection end **15** and the mounting end **17.** Second lower jaw connection axis **48** may be positioned between the upper jaw connection end **15** and the hydraulic cylinder (not shown). Second lower jaw connection axis **48** may be positioned between the upper jaw connection end **15** and the line of extraction and retraction of the hydraulic cylinder. Second lower jaw connection axis **48** may be positioned on the hinge portion **19.** Second lower jaw connection axis **48** may be positioned adjacent the upper jaw connection end **15.**

With respect to the Figs. 1 and 3, in the first embodiment, second lower jaw connection axis **48** may be parallel to the first lower jaw connection axis **44.** First lower jaw connection axis **44** may be spaced from the second lower jaw connection axis **48.** First lower jaw connection axis **44** may be spaced from the second lower jaw connection axis **48** in a direction away from the central axis **13.** First lower jaw connection axis **44** may be spaced from the second lower jaw connection axis **48** in a direction away substantially perpendicular from the central axis **13.** Second lower jaw connection axis **48** may be located between the first lower jaw connection axis **44** and the central axis **13.**

With respect to the Figs. 4 and 5, in the second embodiment, second lower jaw connection axis **48** may be parallel to the first lower jaw connection axis **44.** First lower jaw connection axis **44** may be adjacent from the second lower jaw connection axis **48.** Second lower jaw connection axis **48** may be located between the first lower jaw connection axis **44** and the central axis **13.**

The upper jaw **16** may be pivotably coupled to the frame **14** or lower jaw **18.** Upper jaw **16** may be coupled to the frame **14** or lower jaw **18** at the first lower jaw connection axis **44.** Inner portion **38** may be coupled to the frame **14** or lower jaw **18** at the first lower jaw connection axis **44.**

Outer portion **36** may be coupled to the frame **14** or lower jaw **18** at the second lower jaw connection axis **48.** Outer portion **36** may be coupled to the frame **14** or lower jaw **18** at the second lower jaw connection axis **48** through a first linkage **42.**

The first linkage **42** may be a pivot connection. In an embodiment, first linkage **42** may comprise a pin (not shown) inserted through aligned holes (not shown) on the inner portion **38** and the frame **14.** The inner portion **38** may be may be pivotably connected to the pin.

Upper jaw **16** may pivot about the first lower jaw connection axis **44.** Upper jaw **16** may pivot relative to the frame **14** or lower jaw **18.** Upper jaw **16** may pivot between an upper jaw position and a lower jaw position. Outer portion **36** may pivot about the first lower jaw connection axis **44.** Outer portion **36** may pivot relative to the frame **14** or lower jaw **18.**

The upper jaw position may correspond to the close position of the jaw assembly **12** and the lower jaw position may correspond to the open position of the jaw assembly **12.** With reference to Figs. 1 and 4, the upper jaw **16** may be in the upper jaw position. With reference to Figs. 2, 3 and 5, the upper jaw **16** may be in the lower jaw position.

The pivoting path of the upper jaw **16** may be limited at the upper jaw position and at the lower jaw position. At the upper jaw position, upper jaw **16** may be limited by abutting contact with the lower jaw **18.** At the upper jaw position, upper jaw **16** may be limited by the hydraulic cylinder. At the lower jaw position, upper jaw **16** may be limited by the hydraulic cylinder. The complete retraction of the hydraulic cylinder may correspond to the lower jaw position.

With reference to Figs. 1 and 2, the inner portion **38** may be connected to the outer portion **36** for mutual relative movement. The inner portion **38** may be rotatably connected to the outer portion **36.** Outer portion **36** may rotate relative to the inner portion **38.** Outer portion **36** may rotate relative to the inner portion **38** as the upper jaw **16** moves between the first and second positions. In an embodiment, inner portion **38** may be connected to the outer portion **36** by a pin (not shown) inserted through aligned holes (not shown) on the respective inner and outer portions **38, 36.** Inner and outer portions **38, 36** may be pivotably connected to the pin.

With reference to Fig. 2, upper jaw **16** may have a first engagement portion **22.** The first engagement portion **22** may contact material to be crushed and/ pulverised. In an embodiment, the first engagement portion **22** may have a series of teeth **24.** In an alternative embodiment, the first engagement portion **22** may comprise cutters **27.** In a further alternative, the first engagement portion **22** may comprise teeth **24** and cutters **27.**

The first engagement portion **22** may comprise an outer engagement portion **29** provided on the outer portion **36** and an inner engagement portion **31** provided on the inner portion **38.** Outer engagement portion **29** may rotate relative to the inner engagement portion **31.** Outer engagement portion **29** may rotate relative to the inner engagement portion **31** as the upper jaw **16** moves between the first and second positions.

With reference to Fig. 2, in the first embodiment, the outer engagement portion **29** may be rotated towards the inner engagement portion **31** at the second position. With respect to Fig. 5, in the second embodiment, the outer engagement portion **29** may rotate away from the inner engagement portion **31** at the second position.

The outer engagement portion **29** may lie on an outer engagement plane **23.** In embodiment, the free ends **25** of the teeth **24** may lie on the outer engagement plane **23.** The inner engagement portion **31** may lie on an inner engagement plane **37.** In an embodiment, the free ends of the cutter **27** may lie on the inner engagement plane **37.** Outer engagement plane **23** may rotate relative to the inner engagement plane **37** as the upper jaw **16** moves between the first and second positions.

In the first embodiment, the outer engagement plane **23** may be rotated towards the inner engagement plane **37** at the second position. In the second embodiment, the outer engagement plane **23** may rotate away from the inner engagement plane **37** at the second position.

With reference to Fig. 3, inner portion **38** may be connected to the outer portion **36** at a first upper jaw connection axis **40** for mutual relative movement. First upper jaw connection axis **40** may be interposed between the outer portion **36** and the inner portion **38.** First upper jaw connection axis **40** may be located at rear part of the outer portion **36** and the fore part of the inner portion **38.** First upper jaw connection axis **40** may be transverse to the outer portion **36** and the inner portion **38.** First upper jaw connection axis **40** may extend through the outer portion **36** and the inner portion **38.** The outer portion **36** and the inner portion **38** may have overlapping parts at the first upper jaw connection axis **40.** The first upper jaw connection axis **40** may be adjacent from the first engagement portion **22.**

First upper jaw connection axis **40** may move relative to the frame **14** or lower jaw **18.** First upper jaw connection axis **40** may rotate relative to the frame **14** or lower jaw **18.** First upper jaw connection axis **40** may rotate relative to the frame **14** or lower jaw **18** as the upper jaw **16** moves between the first and second positions. First upper jaw connection axis **40** may rotate relative to the hinge **19** as the upper jaw **16** moves between the first and second positions.

First upper jaw connection axis **40** may move relative to the first lower jaw connection axis **44.** First upper jaw connection axis **40** may rotate relative to the first lower jaw connection axis **44.** First upper jaw connection axis **40** may rotate relative to the first lower jaw connection axis **44** as the upper jaw **16** moves between the first and second positions.

First upper jaw connection axis **40** may move relative to the second lower jaw connection axis **48.** First upper jaw connection axis **40** may move in an arc shaped path relative to the second lower jaw connection axis **48.** First upper jaw connection axis **40** may pivot relative to the second lower jaw connection axis **48.** First upper jaw connection axis **40** may pivot relative to the second lower jaw connection axis **48** as the upper jaw **16** moves between the first and second positions.

With reference to Fig. 1 and 3, upper jaw 16 may be coupled to the frame **14** or lower jaw **18** at the second lower jaw connection axis **48.** Outer portion **36** may be coupled to the frame **14** or lower jaw **18** at the second lower jaw connection axis **48.** Outer portion **36** may be coupled to the frame **14** or lower jaw **18** through a second linkage **46.** The second linkage **46** may be a connection between a second upper jaw connection axis **50** and the second lower jaw connection axis **48.** The second linkage **46** may comprise a link member **52** connected between the second upper jaw connection axis **50** and the second lower jaw connection axis **48.** Link member **52** may pivot about the second upper jaw connection axis **50.** Link member **52** may pivot about the second lower jaw connection axis **48.**

The link member **52** may be connected at the second upper jaw connection axis **50** on the outer portion **36.** A pin (not shown) may extend between the spaced apart plates of the outer portion **36.** The link member **52** may be connected to the pin. The link member 52 may be pivotably connected to the pin.

At the opposite end, the link member **52** may be connected at the second lower jaw connection axis **48** on the frame **14** or lower jaw **18.** A pin (not shown) may extend between the spaced apart plates of the frame **14** or lower jaw **18.** The opposite end of the link member **52** may be pivotably connected to the pin. The pin may extend between the spaced apart plates of the frame **14** or lower jaw **18.** The pin may be rigidly connected to the hinge portion **19.** In an embodiment, opposite ends of the pin may be rigidly connected to the lower jaw **18.** In a further embodiment, the pin may extend through the inner portion **39.**

In an embodiment, second upper jaw connection axis **50** may be interposed between the outer portion **36** and the inner portion **38.** Second upper jaw connection axis **50** may be located at rear part of the outer portion **36** and the fore part of the inner portion **38.** Second upper jaw connection axis **50** may be transverse to the outer portion **36** and the inner portion **38.** Second upper jaw connection axis **50** may extend through the outer portion **36** and the inner portion **38.** The outer portion **36** and the inner portion **38** may have overlapping parts at the second upper jaw connection axis **50.**

With reference to Figs. 1 and 2, in the first embodiment, the second upper jaw connection axis **50** may be spaced from the first engagement portion **22.** With reference to Figs. 4 and 5, in the second embodiment, the second upper jaw connection axis **50** may be adjacent the first engagement portion **22.**

Second upper jaw connection axis **50** may move relative to the frame **14** or lower jaw **18.** Second upper jaw connection axis **50** may rotate relative to the frame **14** or lower jaw **18.** Second upper jaw connection axis **50** may rotate relative to the frame **14** or lower jaw **18** as the upper jaw **16** moves between the first and second positions. Second upper jaw connection axis **50** may rotate relative to the hinge **19** as the upper jaw **16** moves between the first and second positions.

Second upper jaw connection axis **50** may move relative to the first lower jaw connection axis **44.** Second upper jaw connection axis **50** may rotate relative to the first lower jaw connection axis **44.** Second upper jaw connection axis **50** may rotate relative to the first lower jaw connection axis **44** as the upper jaw **16** moves between the first and second positions.

Second upper jaw connection axis **50** may move relative to the second lower jaw connection axis **48.** Second upper jaw connection axis **50** may rotate relative to the second lower jaw connection axis **48.** Second upper jaw connection axis **50** may rotate relative to the second lower jaw connection axis **48** as the upper jaw **16** moves between the first and second positions.

Inner portion **38** may have a structure that corresponds to rear portions of known jaws. Outer portion **36** may have a structure that corresponds to fore portions of known jaws. With reference to Fig. 3, in an embodiment, outer portion **36** may have a body member **53** and a lever member **54.** Body member **53** may carry the engagement portion **22.** Body member **53** may be coupled to the inner portion **38.** Lever member **54** may extend from the body member **53.** Lever member **54** may extend from the body member **53** in a direction away from the engagement portion **22.** Lever member **54** may extend from the side of the body member **53** that is opposite the engagement portion **22.**

Lever member **54** may have a base portion **56** and an apex portion **58.** The base portion **56** may be connected to the body member **53.** Apex portion **58** may be held away from the body member **53.** In an embodiment, the second upper jaw connection axis **50** may be located at the apex portion **58.** The second upper jaw connection axis **50** may be remote from the body member **53.**

The lever member **54** may be comprised of spaced apart plates **59.** The second upper jaw connection axis **50** may extend through the spaced apart plates **59.** The link member **52** may be connected at the second upper jaw connection axis **50** between the spaced apart plates **59.** An apex pin member **60** may extend between the spaced apart plates **59.** The apex pin member **60** may be disposed at the apex portion **58.** The link member **52** may be connected to the apex pin member **60.** The link member **52** may be pivotably connected to the apex pin member **60.** Link member **52** may pivot about the apex pin member **60.**

Pivoting movement of the upper jaw **16** may move the first engagement portion **22.** First engagement portion **22** may move along a rotational path. Each point of the plane of the first engagement portion **22** may move along a rotational path. The first engagement portion **22** may move between an upper jaw position and a lower jaw position.

With reference to Figs. 1 and 4, at the upper jaw position, the outer engagement portion **29** may be aligned to the inner engagement portion **31.** The outer engagement portion **29** may be substantially parallel to the inner engagement portion **31.** With reference to Figs. 2 and 5, at the lower jaw position, the outer engagement portion **29** may be inclined relative to the inner engagement portion **31.**

Pivoting movement of the upper jaw **16** may move the outer engagement plane **23.** Outer engagement plane **23** may move along a rotational path. The outer engagement plane **23** may move between an upper jaw position and a lower jaw position.

With reference to Figs. 1 and 4, at the upper jaw position, the outer engagement portion **29** may be aligned to the inner engagement portion **31.** The outer engagement plane **23** may be substantially parallel to the inner engagement plane **37.** With reference to Figs. 1 and 4, at the lower jaw position, the outer engagement plane **23** may be inclined relative to the inner engagement plane **37.**

With reference to Fig. 1 upper jaw **16** may have a cylinder engagement portion **26.** Cylinder engagement portion **26** may be connected to the hydraulic cylinder (not shown). Cylinder engagement portion **26** may be connected to the piston rod head (not shown) of the hydraulic cylinder. In an alternate embodiment, cylinder engagement portion **26** may be connected to a bottom connection point (not shown) of the hydraulic cylinder. Cylinder engagement portion **26** may be an elongated extension of the inner portion **38.**

With the upper jaw **16** coupled to the hydraulic cylinder, extraction or retraction thereof may effect corresponding movement of the upper jaw **16.** Upper jaw **16** may be moved relative to the frame **14** or lower jaw **18.** Extraction of the hydraulic cylinder may move the upper jaw **16** towards the upper jaw position. Retraction of the hydraulic cylinder may move the upper jaw **16** towards the lower jaw position.

The lower jaw **18** may be coupled to the frame **14** or be integral with the frame **14.** Lower jaw **18** may be coupled to the frame **14** at a position spaced from the first lower jaw connection axis **44.** Lower jaw **18** may be coupled to the frame **14** at a position adjacent to the central axis **13.** In an embodiment, the lower jaw **18** may be welded to the frame **14.** First lower jaw connection axis **44** may be located at an extension on lower jaw **18.** Upper jaw **16** may connect pivotally to the extension on lower jaw **18** at the first lower jaw connection axis **44.**

With reference to Figs. 2 and 5, at an end, lower jaw **18** may have a second engagement portion **32.** The second engagement portion **32** may contact material to be crushed and/ or pulverised. The second engagement portion **32** may lie on a second engagement plane **33.** In an embodiment, the second engagement portion **32** may have a series of teeth **34.** The free ends **35** of the teeth **34** may lie on the second engagement plane **33.** In an alternative embodiment, the second engagement portion **32** may comprise cutters. The free ends of the cutters may lie on the second engagement plane **33.** In a further alternative, the second engagement portion **32** may comprise teeth and cutters.

With reference to Fig. 1, at the closed position, the upper and lower jaws **16, 18** may contact at an abutment plane **21.** The abutment plane **21** may be formed at the contact of the outer and inner engagement planes **23, 37** with the second engagement plane **33.** The abutment plane **21** may be formed at the contact of the first and second engagement portions **22, 32.** The abutment plane **21** may be located at the intersection of the teeth **24** of the first engagement portion **22** and the teeth **34** of the second engagement portion **32.** In an embodiment, the abutment plane **21** may be parallel to the central axis **13.** In an alternative embodiment, the abutment plane **21** may be inclined to the central axis **13.**

Lower jaw **18** may be fixedly coupled to the frame **14.** Lower jaw **18** may not move relative to the frame **14.** The jaw assembly **12** may be actuated between the closed and open positions by moving the upper jaw **16** relative to the lower jaw **18.** Jaw assembly **12** may be in the closed position with the upper jaw **16** moved to be in contact with the lower jaw **18.** Jaw assembly **12** may be in the open position with the upper jaw **16** moved away from the lower jaw **18.**

In an embodiment, lower jaw **18** may be pivotably coupled to the frame **14.** Lower jaw **18** may pivot about a pivot point. Lower jaw **18** may pivot between an upper jaw position and a lower jaw position. The upper jaw position may correspond to the close position of the jaw assembly **12** and the lower jaw position may correspond to the open position of the jaw assembly **12.**

At the upper jaw position, lower jaw **18** may be in contact with the upper jaw **16.** The lower jaw **18** may be moved under hydraulic pressure from the upper jaw position to the lower jaw position. Lower jaw **18** may be moved relative to the frame **14.** At the lower jaw position, the lower jaw **18** may be disposed away from the upper jaw **16.**

With reference to Figs. 2 and 5, the capacity of the jaw assembly **12** may be defined by the relative distance between the first engagement portion **22** and the second engagement portion **32.** In particular, the capacity of the jaw assembly **12** may be defined by the relative distance between the outer and inner engagement portions **29, 31** with the second engagement portion **32.** The capacity of the jaw assembly **12** may be the volume defined by the outer and inner engagement planes **23, 37** with the second engagement plane **33.**

The pivoting movement of the upper jaw **16** may define the rotational path of the first engagement portion **22.** The first engagement portion **22** may rotate relative to the second engagement portion **32.** First engagement portion **22** may be in the rotation path when abutting contact is made with the second engagement portion **32.**

The outer and inner engagement portions **29, 31** may each rotate relative to the second engagement plane **33.** The outer and inner engagement planes **29, 31** may each have respective rotation paths relative to the second engagement plane **33.** The outer and inner engagement planes **29, 31** may each have respective rotation paths relative to the frame **14** or lower jaw **18.**

The pivoting movement of the upper jaw **16** may define the rotational path of the outer engagement plane **23** and the inner engagement plane **37.** The outer and inner engagement planes **23, 37** may each rotate relative to the second engagement plane **33.** The outer and inner engagement planes **29, 37** may each have respective rotation paths relative to the second engagement plane **33.** The outer and inner engagement planes **23, 37** may each have respective rotation paths relative to the frame **14** or lower jaw **18.**

The pivoting movement of the upper jaw **16** may move the first engagement portion **22** to a distance from the second engagement portion **32** with an increased capacity. The pivoting movement of the upper jaw **16** may move the outer and inner engagement portions **29, 31** to a distance from the second engagement portion **32** with an increased capacity. The pivoting movement of the upper jaw **16** may move the outer and inner engagement planes **23, 37** to a distance from the second engagement plane **33** with an increased capacity.

The angle of inclination of the inner engagement portion **31** relative to the second engagement plane **33** may increase as the upper jaw **16** is pivoted from the upper jaw position to the lower jaw position.

The work tool **10** may be operated by actuating the jaw assembly **12** by a hydraulic cylinder that is positioned in the frame **14** and connected to the upper jaw **16.** Retraction of the hydraulic cylinder may pivot the upper jaw **16** about the first lower jaw connection axis **44** from the upper jaw position towards the lower jaw position. The first engagement portion **22** may rotate relative to the frame **14** or the lower jaw **18** away from the second engagement portion **32.** The outer and inner engagement portions **29, 31** may rotate relative to the second engagement portion **32.**

The outer engagement portion **29** may rotate relative to the inner engagement portion **31.** In the first embodiment, the outer engagement portion **29** may rotate towards the inner engagement portion **31.** In the second embodiment, the outer engagement portion **29** may rotate away from the inner engagement portion **31.**

The upper jaw **16** may continue the pivoting movement up to the complete retraction of the hydraulic cylinder. The upper jaw **16** may be at the limit of the pivoting path at the lower jaw position. The jaw assembly **12** may be at the largest capacity to pick up material for crushing and/ or pulverizing.

Extraction of the hydraulic cylinder may pivot the upper jaw **16** from the lower jaw position towards the upper jaw position. The first engagement portion **22** may rotate relative to the frame **14** or lower jaw **18** towards the second engagement portion **32.** The outer and inner engagement portions **29, 31** may rotate relative to the second engagement portion **32.**

The outer engagement portion **29** may rotate relative to the inner engagement portion **31.** In the first embodiment, the outer engagement portion **29** may rotate away the inner engagement portion **31.** In the second embodiment, the outer engagement portion **29** may rotate towards the inner engagement portion **31.**

The upper jaw **16** may continue the pivoting movement up to abutting contact of the first and second engagement portions **22, 32.** In an embodiment, the upper jaw **16** may continue the pivoting movement up to the limiting stroke of the hydraulic cylinder. The abutment of the first engagement portion **22** against the second engagement portion **32** may crush and/ or pulverise effect a grinding of the material. The material may be crushed and/ or pulverised with the pivoting movement of the upper jaw **16** towards the lower jaw **18.**

The skilled person would appreciate that foregoing embodiments may be modified or combined to obtain the work tool **10** of the present disclosure.

### Industrial Applicability

This disclosure describes a work tool **10** for a work machine. The work tool **10** may enable work operations such as crushing and/ or pulverizing of an increased amount of work materials such as concrete, in a single work cycle. The work tool **10** may have a larger jaw opening and/ or capacity which enables more work material to undergo work operation in the same work cycle. A larger jaw capacity may enable to bigger blocks of concrete to undergo work operations in a single work cycle.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A work tool (10) comprising:
a jaw assembly (12) comprising an upper jaw (16) and a lower jaw (18), the upper jaw (16) having an inner portion (38) and an outer portion (36) wherein the inner portion (38) is connected to the outer portion (36) at a first upper jaw connection axis (40) for mutual relative movement;
a first linkage (42) connecting the lower jaw (18) to the inner portion (38) at a first lower jaw connection axis (44); and
a second linkage (46) connecting the lower jaw (18) to the outer portion (36).

2. The work tool (10) of claim 1 wherein the second linkage (46) is a connection between a second upper jaw connection axis (50) at the outer portion (36) and a second lower jaw connection axis (48) at the lower jaw (18).

3. The work tool (10) of claim 2 wherein second linkage (46) comprises a link member (52) connected between the second upper jaw connection axis (50) and the second lower jaw connection axis (48).

4. The work tool (10) of claim 3 wherein the link member (52) is a rod.

5. The work tool (10) of claim 2, 3 or 4 wherein the second upper jaw connection axis (50) is spaced from the first upper jaw connection axis (40).

6. The work tool (10) of claim 5 wherein the first upper jaw connection axis (40) is adjacent a first engagement portion (22) of the upper jaw (16) and the second upper jaw connection axis (50) is spaced from the first engagement portion (22).

7. The work tool (10) of any one of preceding claims 2 to 6 wherein the second lower jaw connection axis (48) is spaced from the first lower jaw connection axis (44) in a direction substantially lateral to a central axis (13) of the work tool (10).

8. The work tool (10) of claim 7 wherein the first lower jaw connection axis (44) is adjacent the central axis (13).

9. The work tool (10) of claim 8 wherein the upper jaw jaw connection axis (50) is adjacent a first engagement portion (22) of the upper jaw (16) and the first upper jaw connection axis (40) is spaced from the first engagement portion (22).

10. The work tool (10) of claim 9 wherein the second lower jaw connection axis (48) is positioned adjacent to the first lower jaw connection axis (44).

11. The work tool (10) of any one of preceding claims wherein the first linkage (42) is a pivot connection.

12. The work tool (10) of any one of preceding claims 2 to 11 wherein the second lower jaw connection axis (48) is positioned adjacent an upper jaw connection end (15) of the lower jaw (18) and the second upper jaw connection axis (50) is positioned on a lever member (54) extending from the outer portion (36).

13. A method of operating a work tool (10), the method comprising:
providing a jaw assembly (12) comprising an upper jaw (16) and a lower jaw (18), the upper jaw (16) having an inner portion (38) and an outer portion (36) wherein the inner portion (38) is pivotally connected to the outer portion (36) at a first upper jaw connection axis (40) for mutual relative movement;
providing a first linkage (42) connecting the lower jaw (18) to the inner portion (38) at a first lower jaw connection axis (44);
providing a second linkage (46) connecting the lower jaw (18) to the outer portion (36); and
pivoting the upper jaw (16) about the first lower jaw connection axis (44) such that the outer portion (36) moves relative to the inner portion (38).

14. The method of claim 13 wherein the relative movement of the upper and lower jaws (16, 18) comprise inclining an outer engagement portion (29) of the outer portion (36) towards an inner engagement portion (31) of the inner portion (38).

15. The method of claim 13 wherein the relative movement of the upper and lower jaws (16, 18) comprise inclining the outer engagement portion (29) of the outer portion (36) away from the inner engagement portion (31) of the inner portion (38).
